# EUROPÄISCHE PATENTANMELDUNG

(11) **EP 0 718 355 A2**
(43) Veröffentlichungstag der Anmeldung: **26.06.1996**
(21) Anmeldenummer: 95119827.4
(22) Anmeldetag: 15.12.1995
(51) Int. Cl.: C08K 5/54, C08L 43/04, C08L 83/04, C09D 143/04, C09D 183/04

(54) **Zusammensetzung für die Beschichtung von Formteilen oder elastomeren Materialien**

(30) Priorität: 15.12.1994 DE 4444780
(71) Anmelder: Wacker-Chemie GmbH, D-81737 München (DE)
(72) Erfinder: Müller, Johann, D-84489 Burghausen (DE)
(74) Vertreter: Deffner-Lehner, Maria

(57) **Zusammenfassung**

Die Erfindung betrifft eine Zusammensetzung, ein Verfahren zu ihrer Herstellung und ein Verfahren zur Beschichtung von Formkörpern oder elastomeren Materialien, wobei die Zusammensetzung herstellbar unter Verwendung von
(1) Polymerkomponenten ausgewählt aus der Gruppe bestehend aus
(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2})
(A2) Polyorganosiloxanen aus Einheiten (Q-Einheiten) der Formel (Si-O_{4/2}) und gegebenenfalls Einheiten (M-Einheiten) der Formel (R₃Si-O_{1/2})
   worin
   R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
   mit der Maßgabe, daß pro Molekül 0,01 bis 3,0 Gew.-% Si-gebundene Reste OR¹ enthalten sind,
   (B) Vinylchlorid-Hydroxypropylacrylat-Copolymere
   (C) Vinylacetat-Ethylen-Copolymer
   (D) Polyvinylchlorid
   (E) Polyamid
   (F) Polyester
   (G) Acrylat-Polyester-Copolymere
   (H) Polyamid-Polyester-Copolymere
   (I) Vinylacetat-Polyester Copolymere
   (J) Monomere (Meth)acrylate, mit der Maßgabe, daß sie mit Si-gebundenen (Meth)acrylatgruppen haltigen Silanen copolymerisiert werden,
(2) Silan der allgemeinen Formel

   R³ₓSi(OR²)₄₋ₓ ,

   wobei R² einen einwertigen, gegebenenfalls substituierten Kohlenwasserstoffrest,
   R³ einen einwertigen organischen Rest,
   x 0 oder 1 bedeutet,
(3) gegebenenfalls Lösungsmittel
(4) gegebenenfalls Katalysator
(5) gegebenenfalls Wasser ist.

## Beschreibung

Die Erfindung betrifft eine Zusammensetzung, ein Verfahren zu ihrer Herstellung und ein Verfahren zur Beschichtung von Formkörpern oder elastomeren Materialien.

Es ist bekannt, daß Siliconkautschukoberflächen hohe Haft- und Gleitreibungsfaktoren aufweisen. Insbesondere Siliconkautschuke mit Shore A Härte unter 70 zeigen stark blockende Eigenschaften und sind leicht anschmutzbar.

In AT-250682 wird ein Verfahren zum Beschichten eines Grundmaterials beschrieben, wobei das Grundmaterial mit einer wäßrigen Lösung der Hydrolysate eines Organosilans, das einen Acryloxyrest aufweist, beschichtet und gehärtet wird. In einer zweiten Stufe wird die grundierte Oberfläche mit einem polymerisierbaren Harz, insbesondere Polyesterharz beschichtet. Dieses Verfahren dient zur Erhöhung der Festigkeit von Preß- oder Schichtkörpern.

EP 220 804 beschreibt ein Glasgewebe, das eine erste Schicht aus einem Polydiorganosiloxan aufweist, die Methyl-und Phenylgruppen in einem Verhältnis von 0,25 bis 3,7, verglichen mit einer Beschichtung, die nur Methylgruppen hat, aufweist, wobei das mit dem Polydiorganosiloxan beschichtete Glasgewebe transparent oder translucent ist. Eine zweite Schicht besteht sodann aus einem Polydimethylsiloxan. Auf diese Schicht wird noch eine dritte Polyorganosiloxanschicht aufgetragen.

US 4,489,127 beschreibt Beschichtungen für Dächer aus Glasfasergewebe, die Diorganosiloxane enthalten, die Dimethysiloxan- und Phenylmethyleinheiten und Copolymere aus R₃SiO_{1/2} und SiO_{4/2} Einheiten enthalten.

US 3,639,155 beschreibt schmutzabweisende Organosiloxanbeschichtungen, die Dimethylsiloxan-, Phenylmethylsiloxan- und Monomethylsiloxaneinheiten sowie Organosiloxaneinheiten, die Si-gebundene Acetoxy-, Alkoxy- oder Ketoximgruppen enthalten, aufweisen.

Nachteilig ist am Stand der Technik, daß die bekannten Beschichtungen, bedingt durch den Gehalt an Phenylgruppen, beim Erhitzen oder im Brandfalle aromatische Stoffe abscheiden. Weitere Nachteile des Standes der Technik sind, daß der Reibungsfaktor nicht oder nur unwesentlich reduziert wird, und daß Phenylreste am Silicium schwer zugänglich sind.

Aufgabe der Erfindung ist es, die bekannten Beschichtungen zu verbessern, sowie Beschichtungen mit verbesserten schmutzabweisenden Eigenschaften sowie einem geringeren Reibungskoeffizienten zu Verfügung zu stellen.

Gegenstand der Erfindung ist eine Zusammensetzung, herstellbar unter Verwendung von
(1) Polymerkomponeneten ausgewählt aus der Gruppe bestehend aus
   (A1) Polyorganosiloxanen aus Einheiten (T-Einheiten) der Formel (R₁Si-O_{3/2}) und gegebenenfalls Einheiten (M-Einheiten) der Formel (R₃Si-O_{1/2})
   (A2) Polyorganosiloxanen aus Einheiten (Q-Einheiten) der Formel (Si-O_{4/2}) und gegebenenfalls Einheiten (M-Einheiten) der Formel (R₃Si-O_{1/2})
      worin
      R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
      mit der Maßgabe, daß pro Molekül 0,01 bis 3,0 Gew.-%, bevorzugt 0,01 bis 1 Gew.-% Si-gebundene Reste OR¹ enthalten sind,
   (B) Vinylchlorid-Hydroxypropylacrylat-Copolymere
   (C) Vinylacetat-Ethylen-Copolymer
   (D) Polyvinylchlorid
   (E) Polyamid
   (F) Polyester
   (G) Acrylat-Polyester-Copolymere
   (H) Polyamid-Polyester-Copolymere
   (I) Vinylacetat-Polyester Copolymere
   (J) Monomere (Meth)acrylate, mit der Maßgabe, daß sie mit Si-gebundenen (Meth)acrylatgruppen-haltigen Silanen copolymerisiert werden,
(2) Silan der allgemeinen Formel

   R³ₓSi(OR²)₄₋ₓ ,

   wobei R² einen einwertigen, gegebenenfalls substituierten Kohlenwasserstoffrest,
   R³ einen einwertigen organischen Rest,
   x 0 oder 1 bedeutet,
(3) gegebenenfalls Lösungsmittel
(4) gegebenenfalls Katalysator
(5) gegebenenfalls Wasser

Beispiele für Reste R sind vorzugsweise Alkylreste, wie der Methyl-, Ethyl-, n-Propyl-, iso-Propyl-, n-Butyl-, iso-Butyl-, tert. -Butyl-, n-Pentyl-, iso-Pentyl-, neo-Pentyl- und tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest.

Schon wegen der leichteren Zugänglichkeit ist als Rest R Methyl- oder Ethylrest bevorzugt.

Bei Rest R¹ handelt es sich bevorzugt um Wasserstoffatom und gegebenenfalls substituierte Kohlenwasserstoffreste mit 1 bis 8 Kohlenstoffatom(en), wobei Wasserstoff und Alkylreste mit 1 bis 3 Kohlenstoffatom(en), insbesondere der Methyl-, Ethyl-, und Isopropylrest, besonders bevorzugt sind.

Beispiele für Reste R¹ sind die für den Rest R genannten Beispiele mit 1 bis 8 Kohlenstoffatom(en).

Beispiele für Reste R² sind bevorzugt gegebenenfalls substituierte Kohlenwasserstoffreste mit 1 - 18 Kohlenstoffatom(en), besonders bevorzugt sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest. Bevorzugt ist der Methyl- und Ethylrest. Beispiele für Kohlenwasserstoffreste R², die durch ein Ethersauerstoffatom substituiert sein können, sind der Methoxyethyl-, der Ethoxyethyl-, der Methoxy-n-propyl- und der Methoxy-iso-propylrest.

Beispiele für Reste R³ sind bevorzugt gegebenenfalls substituierte Kohlenwasserstoffreste mit 1 - 18 Kohlenstoffatom(en), besonders bevorzugt sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest und iso-Hexylreste; Heptylreste, wie der n-Heptylrest und iso-Heptylreste; Octylreste, wie der n-Octylrest und iso-Octylreste, wie der 2,2,4-Trimethylpentylrest; Nonylreste, wie der n-Nonylrest und iso-Nonylreste; Decylreste, wie der n-Decylrest und iso-Decylreste; Dodecylreste, wie der n-Dodecylrest und iso-Dodecylreste; Octadecylreste, wie der n-Octadecylrest und iso-Octadecylreste; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste, Ethylphenylreste, o-, m-, p-Vinylphenylreste und der Nonylphenylrest; und Aralkylreste, wie der Benzylrest, der α- und der β-Phenylethylrest; Isocyanalkylreste wie der Isocyanpropylrest, Isocyanethylrest, Isocyanhexylrest, Isocyanoctylrest, wobei der Isocyanpropylrest bevorzugt ist und (Meth)acryloxyreste wie der Methacryloxypropylrest, Acryloxypropylrest, Methacryloxyhexylrest, Acryloxyhexylrest, wobei der Methacryloxypropylrest bevorzugt ist.

Beispiele für halogenierte Kohlenwasserstoffreste R sind Halogenalkylreste, wie der 3-Chlor-n-propylrest, der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Bei den Polyorganosiloxanen (A1) beträgt das Verhältnis M-Einheiten zu T-Einheiten 0 bis 1,8:1, bevorzugt 0,1 bis 1,2:1 und besonders bevorzugt 0,3 bis 0,8:1 und bei den Polyorganosiloxanen (A2) beträgt das Verhältnis M-Einheiten zu Q-Einheiten 0,00 bis 2,7:1, bevorzugt 0,01 bis 2,1:1 besonders bevorzugt 0,1 bis 1,8:1.

Die erfindungsgemäßen Polyorganosiloxane bilden ein Polymerisat aus 2-500, bevorzugt 4-300 Monomereinheiten.

Die Polymerkomponenten (A1) und (A2) können allein oder jeweils als Mischungen oder Umsetzungsprodukte der Organosiloxaneinheiten eingesetzt werden. Bevorzugt sind Polymerkomponenten, wie die Harzlösung K oder die Harzlösung K 0118 der Wacker-Chemie GmbH. Diese Harze können vorzugsweise in Lösungsmitteln, wie Toluol, Xylol, Aceton, Essigsäureethylester, Ethanol gelöst sein. Die Lösungsmittel werden in Mengen von vorzugsweise 10 bis 98 Gew.%, bevorzugt 30 bis 98 Gew.%, jeweils bezogen auf das Gesamtgewicht der Polymerkomponenten, eingesetzt.

Die Polymerkomponenten (A1) und (A2) können alleine oder als Mischungen in einem Verhältnis von 1:20 bis 20:1, bevorzugt 1:10 bis 10:1 eingesetzt werden.

Neben den Polymerkomponenten (A1) und (A2) können auch als Polymerkomponenten
(B) Vinylchlorid-Hydroxypropylacrylat-Copolymere eingesetzt werden. Solche Produkte werden von der Vinnolit GmbH im Handel unter der Bezeichnung Vinnolit E 15/40 A angeboten. Oder es können (C) Copolymere aus Vinylacetat und Ethylen ebenfalls als Polymerkomponenten eingesetzt werden. Durch in der Literatur bekannte Verfahren können aus beiden Monomeren Copolymere in jedem gewünschten Verhältnis hergestellt werden.
Als weitere Polymerkomponenten können, (D) Polyvinylchlorid (E) Polyamid, (F) Polyester, (G) Acrylat-Polyester-Copolymere, (H) Polyamid-Polyester-Copolymere oder (I) Vinylacetat-Polyester-Copolymere oder (J) Monomere (Meth)acrylate, wie Methylmethacrylat, Butylmethacrylat, eingesetzt werden, die im Reaktionsgemisch polymerisiert werden. Bevorzugt sind die Polymerkomponenten (A1), (A2), (B) und (C), besonders bevorzugt sind die Polymerkomponenten (A1) und (A2).

Die Polymerkomponenten sind in Mengen von 2-70 Gew.% in den erfindungsgemäßen Zusammensetzungen enthalten. Bevorzugt ist eine Menge von 5-50 Gew.%, besonders bevorzugt ist eine Menge von 10-40 Gew.%.

Bevorzugte Beispiele für Silane (2) sind Methacryloxypropyltrimethoxysilan (Handelsbezeichnung Silan GF 31 - Wacker-Chemie GmbH),
Methyltriethoxysilan (Handelsbezeichnng Silan M1-Triethoxy - Wacker-Chemie GmbH),
Vinyltriethoxysilan (Handelsbezeichnung Silan GF 56 - Wacker-Chemie GmbH),
Tetraethoxysilan (Handelsbezeichnung TES 28 - Wacker-Chemie GmbH),
Gemische aus niedermolekularen Hydrolyseprodukten aus Tetraethoxysilan (Handelsbezeichnung TES 40 - Wacker-Chemie GmbH),
Methyltrimethoxysilan (Handelsbezeichnung M1-Trimethoxy - Wacker-Chemie GmbH),
Isocyanatpropyltrimethoxysilan (Handelsbezeichnung Silan Y 9030 UCC).

Die Silane sind in Mengen von 0,1-20 Gew.%, bevorzugt von 0,5-10 Gew.%, enthalten.

Die Polymerkomponenten werden mit den Silanen (2) oder deren Mischungen im Verhältnis von 100:1 bis 100:30, besonders bevorzugt 100:2 bis 100:20 eingesetzt.

Die Zusammensetzungen werden vorzugsweise in organischen Lösungsmitteln, wie Tetrahydrofuran, Toluol, Aceton, Naphtha, Benzin, Methylethylketon, Xylol, Butylalkohol, Ethylacetat, Isopropylacetat, Isopropanol hergestellt.

Organische Lösungsmittel sind in Mengen von 10 bis 90 Gew.% enthalten, bevorzugt sind 30-85 Gew.%.

Die Zusammensetzungen werden gegebenenfalls mit Kondensationskatalysatoren, wie vorzugsweise organische Zinnverbindungen oder organische Zirkonverbindungen wie vorzugsweise Zirkoniumbutylat, Dibutylzinndilaurat, Dibutylzinnoxid, Dioctylzinndilaurat, Dibutylzinndiacetat vermischt.

Bevorzugt unter diesen Kondensationskatalysatoren sind Dibutylzinndilaurat, Dibutylzinnacetat, Zirkoniumbutylat.

Die Kondensationskatalysatoren sind in Mengen zwischen 0-10 Gew.% enthalten. Bevorzugt sind Mengen von 0-5 Gew.%, besonders bevorzugt sind Mengen von 0-2 Gew.%.

Als Quelle für freie Radikale, welche vorzugsweise bei der Polymerenkomponente (J) eingesetzt werden, sind Peroxide, insbesondere organische Peroxide bevorzugt. Beispiele für solche organischen Peroxide sind Peroxyketal, z. B. 1,1-Bis(tert.-butylperoxy)-3,3,5-trimethylcyclohexan, 2,2-Bis(tert.-butylperoxy)butan und ähnliche, Diacylperoxide, wie z. B. Acetylperoxid, Isobutylperoxid, Benzoylperoxid und ähnliche, Dialkylperoxide, wie z. B. Di-tert-butylperoxid, Tert-butyl-cumylperoxid, Dicumylperoxid, 2,5-Dimethyl-2,5-Di(tert.-butylperoxy)hexan t-Butyl-per-ethylhexanoate, und ähnliche und Perester, wie z. B. Tert.-butylperoxyisopropylcarbonat. Bevorzugt ist t-Butyl-per-ethylhexanoate (Handelsbezeichnung Peroxan PO) Interox TBPIN
Vorzugsweise werden Peroxide in Mengen von 0 bis 5 Gew.%, insbesondere von 0 bis 3 Gew.%, jeweils bezogen auf das Gewicht von eingesetzter Verbindung im erfindungsgemäßen Verfahren, verwendet.

Gegebenenfalls kann auch Wasser in Mengen von 0-20 Gew.%, bevorzugt 0-10 Gew.% zugegegeben werden.

Die Zusammensetzungen bestehen entweder aus Siliconharzen, die mit funktionellen Silanen vermischt und in organischen Lösungsmitteln hydrolysiert werden oder aus organischen (Co)polymeren, die mit funktionellen Silanen copolymerisiert werden.

Ein weiterer Gegenstand der Erfindung ist ein Verfahren zur Herstellung einer Zusammensetzung unter Verwendung von (1) Polymerkomponenten, ausgewählt aus der Gruppe bestehend aus
(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2})
(A2) Polyorganosiloxanen aus Einheiten (Q-Einheiten) der Formel (Si-O_{4/2}) und gegebenenfalls Einheiten (M-Einheiten) der Formel (R₃Si-O_{1/2})
   worin
   R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
   mit der Maßgabe, daß pro Molekül 0,01 bis 3,0 Gew.-% Si-gebundene Reste OR¹ enthalten sind,
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, daß sie mit Si-gebundenen (Meth)acrylatgruppen-haltigen Silanen copolymerisiert werden, mit
   (2) Silan der allgemeinen Formel

      R³ₓSi(OR²)₄₋ₓ ,

      wobei R² einen einwertigen, gegebenenfalls substituierten Kohlenwasserstoffrest,
      R³ einen einwertigen organischen Rest,
      x 0 oder 1 bedeutet,
   (3) gegebenenfalls Lösungsmittel
   (4) gegebenenfalls Katalysator und
   (5) gegebenenfalls Wasser umgesetzt oder vermischt werden.

Beispiele für R, R¹, R² und R³ sind die oben für die Reste R, R¹, R² und R³ genannten Beispiele.

Die Herstellung der erfindungsgemäßen Zusammensetzungen kann in Rühr- und Mischanlagen, wie sie in der chemischen Industrie üblich sind, erfolgen. Die Anlagen sollten im Bereich von -10 °C bis +150 °C temperierbar und in der Temperatur regelbar sein. Wegen der Verwendung von organischen Lösungsmitteln ist Explosionsschutz unumgänglich.

Die Herstellung der Zusammensetzungen erfolgt durch einfaches Durchmischen der einzelnen Komponenten bei Temperaturen, die der umgebenden Raumtemperatur entsprechen. Es können aber auch Reaktionen, wie Polymerisation, Kondensationen oder Umsetzung an reaktiven Gruppen durchgeführt werden. Dies erfordert dann eine thermische Kontrolle der Reaktionsabläufe. Solche Verfahren werden zwischen 0 °C und 150 °C durchgeführt. Bevorzugt werden Temperaturen zwischen 10 °C und 120 °C. Der Einfachheit halber werden die Zusammensetzungen bei normalem Luftdruck hergestellt. Die Herstellung kann aber ebenso bei Überdruck bis zu 20 bar oder im Vakuum bis 20 mbar stattfinden.

Ein weiterer Gegenstand der Erfindung ist ein Formkörper oder Elastomer, das mit einer erfindungsgemäßen Zusammensetzung beschichtet ist.

Die erfindungsgemäßen Zusammensetzungen werden als Schutzbeschichtungen für elastomere Formteile oder als Topcoats für mit elastomeren Materialien beschichtete Folien, Metallteile, Gewebe, Gewirke, Gestricke, Vliese aus Kunst- Natur- oder Mineralfasern verwendet. Beispiele hierfür sind Spritzguß- oder Extrusionsformteile aus elastomeren Materialien, wie Naturkautschuk, Nitrilkautschuk, Butylkautschuk oder Siliconkautschuk. Mit elastomeren Materialien beschichtete textile Träger, wie z.B. Förderbänder, Kompensatoren, Schutzkleidung, Elektroisolierschläuche, Elektroisoliermatten, beschichtete Textilien, die für textile Konstruktionen, wie z.B. Zelte, Abdeckungen, Planen verwendet werden können, zeigen nach der erfindungsgemäßen Ausrüstung mit den erfindungsgemäßen Topcoats kratzfeste, schmutzabweisende Oberflächen mit reduziertem Reibungsfaktor gegen sich selbst und gegen andere Materialien. Als Basismaterial wird vorzugsweise Dimethylsiliconkautschuk und nicht Phenylmethylsiliconkautschuk verwendet.

Ein weiterer Gegenstand der Erfindung ist ein Verfahren zur Beschichtung von Formkörpern oder Elastomeren mit der erfindungsgemäßen Zusammensetzung.

Die erfindungsgemäßen Zusammensetzungen können durch Sprühen, Streichen, Rakeln, mit Walzen, durch Tampondruck, durch Siebdruck, Tauchen, oder ähnliche Techniken aufgebracht werden. Sie gehen mit üblichen Siliconkautschukoberflächen eine feste Verbindung ein. Die Aushärtung erfolgt durch Abdampfen des Lösungsmittels und anschließender Polykondensation. Die Härtung kann thermisch beschleunigt werden.
Die mit den erfindungsgemäßen Deckbeschichtungen behandelten Oberflächen sind schmutzabweisend, kratzfest und weisen reduzierte Reibungsfaktoren zu sich selbst sowie zu anderen Materialien, wie Glas, Metall, Kunststoffen, Geweben etc. auf.
Es werden üblicherweise Oberflächen von Siliconkautschukformteilen, -spritzgußteilen, -isolierschläuchen, medizinischen Artikeln, mit Siliconkautschuk beschichtete Gewebe, Vliese, Filze, Folien oder Papiere mit den erfindungsgemäßen Topcoats behandelt.
Wichtige Eigenschaften des Basismaterials, wie Zugfestigkeit, Dehnung, Elastizität, Weiterreißfestigkeit, Beständigkeit gegen Wärme und Kälte, gegen Chemikalien oder Licht, werden durch die Oberflächenbehandlung nicht beeinflußt.

Vorteile der erfindungsgemäßen Zusammensetzung sind, daß die Zusammensetzungen auch auf Siliconkautschukformteile, Spritzgußteile, Isolierschläuche, etc. aufgebracht werden können. Die Anwendung ist somit nicht nur auf beschichtete Gewebe beschränkt. Die erfindungsgemäßen Zusammensetzungen bestehen nicht nur aus reinen Siliconharzen, sondern auch aus Copolymeren und Siliconanteilen. Dies macht es möglich, mehrere Eigenschaften, wie Schmutzabweisung, Kratzfestigkeit und reduzierten Reibungswiderstand mit nur einem Topcoat zu erzielen. Die Topcoats führen nicht zur Versteifung des Basismaterials, wie dies bei den bekannten Methoden der Fall ist. Dies ist vor allem im Bereich der beschichteten Textilien ein wesentlicher Vorteil.

Die Deckbeschichtung kann in nur einem Arbeitsgang aufgebracht werden. Zusammen mit der Basisbeschichtung sind also nur zwei Arbeitsgänge erforderlich. Im Falle von beschichteten Geweben, Gewirken, Gestricken oder Filzen kann mit handelsüblichen Flüssigsiliconkautschuken als Basisbeschichtung gearbeitet werden. Es sind Verfahren bekannt, die es durch Zugabe von Haftvermittlern ermöglichen, hierbei ohne eine Grundierung eine ausreichende Haftung zu erzielen.

### Beispiele

### Beispiel 1:

In ein Rührwerk mit Destillationsaufsatz werden 700 kg einer Siliconharzlösung K Toluol (Verkaufsprodukt der Wacker-Chemie GmbH) und 200 kg Siliconharzlösung K 0118 (Verkaufsprodukt der Wacker-Chemie GmbH) eingelegt und durchmischt.

Unter ständigem Rühren werden 324 kg Toluol durch Erwärmen bei Normaldruck abdestilliert.

Die Anlage mit Inhalt wird auf Raumtemperatur abgekühlt und 108 kg Methyltriethoxysilan (Handelsbezeichnung M1-Triethoxysilan der Wacker-Chemie GmbH), 54 kg Tetraethoxysilan (Handelsbezeichnung TES 28 der Wacker-Chemie GmbH), 54 kg Vinyltriethoxysilan (Handelsbezeichnung Silan GF 56 der Wacker-Chemie GmbH) sowie 5 kg Zirkoniumbutylat werden in der genannten Reihenfolge unter Rühren zugegeben.

1 Stunde wird bei Raumtemperatur gerührt, dann werden 900 kg Aceton und 44 kg Wasser unter Rühren zugegeben.
Nach weiteren 2 Stunden Rühren bei Raumtemperatur wird das Produkt in passende Gebinde abgefüllt.
Die klare, farblose Flüssigkeit zeigt eine Viskosität von ca. 1,5 mPa·s und einen Feststoffgehalt von ca. 28 %.

### Beispiel 1a

Ein Polyestergewebe, das mit Elastosil LR 6250 F (Handelsprodukt der Wacker-Chemie GmbH) beschichtet wurde, wird mit der Lösung aus Beispiel 1 mit einem Rakelmesser beschichtet, das Lösungsmittel wird bei Raumtemperatur in 5 Min. abgedampft und anschließend 5 Min. bei 150 °C getrocknet. Das Beschichtungsgewicht des Topcoats beträgt ca. 40 g/m².

### Beispiel 1b:

Bei einem Anschmutztest mit Ruß zeigt das nach 1a mit dem Topcoat versehene Gewebe eine deutlich reduzierte Schmutzaufnahme. Wird ein mit Ruß verschmutztes, saugfähiges Papier über das beschichtete Gewebe gezogen und die Schmutzaufnahme gravimetrisch bestimmt, so ist die Schmutzaufnahme um den Faktor 8 reduziert.

Auf ein saugfähiges Papier werden 1 g Ruß pro m² aufgebracht. Dieses mit Ruß verschmutzte Papier wird über den auf Schmutzaufnahme zu prüfenden Formkörper gezogen. Die Schmutzaufnahme des Formkörpers wird gravimetrisch bestimmt.
Ein Gewebe, hergestellt wie in 1a beschrieben, zeigt eine Schmutzaufnahme von 0,02 g/m². Der Vergleichswert ohne Topcoat beträgt 0,16 g/m²:

### Beispiel 1c:

Das mit Elastosil LR 6250 F beschichtete Gewebe wird Beschichtung auf Beschichtung plaziert. Es wird ein Reibungsfaktor von 1,4 gemessen. Das modifizierte Gewebe aus Beispiel 1a zeigt in dem selben Test den Reibungsfaktor 0,6. Der Reibungsfaktor des mit Elastosil LR 6250 F beschichteten Polyestergewebes gegen die unbeschichtete Geweberückseite beträgt 0,9. Das nach Beispiel 1a modifizierte Laminat weist einen Reibungsfaktor von 0,55 auf.
Der Reibungsfaktor gegen Edelstahl beträgt ohne Topcoat 0,8 bzw. mit Topcoat 0,58.

Die Reibungsfaktoren gegen Glas sind 1,3 ohne bzw. 0,7 mit Topcoat. Beschichtung wie in Beispiel 1a beschrieben.

### Beispiel 2:

In eine Rühranlage, die mit einer Destillationsmöglichkeit - die zum Abscheiden von azeotrop ausgetragenem Wasser geeignet ist - ausgerüstet ist, werden 94 kg Methylmethacrylat, 94 kg Butylmethacrylat und 313 kg Toluol eingelegt. Durch Erhitzen der Mischung auf 105 °C wird enthaltenes Wasser azeotrop entfernt. Wenn aus dem Gemisch kein Wasser mehr ausgetragen wird, wird auf 30 °C abgekühlt, 21 kg Silan GF 31 (Handelsprodukt der Wacker-Chemie GmbH) und 2,1 kg tert-Butyl-per-ethylhexanoat zugegeben. Das Reaktionsgemisch wird zum Rückfluß erhitzt, wobei bei ca. 100 °C eine deutliche Reaktion einsetzt. Das Gemisch wird 8 Std. am Rückfluß gehalten und auf 30 °C abgekühlt. 15,8 kg n-Butanol und 10,5 kg Silan M1-Trimethoxy (Handelsprodukt der Wacker-Chemie GmbH) werden unter Rühren eingemischt. Nach 30 Min. Rühren werden 720 kg Isopropanol und 180 kg Benzin mit einem Siedebereich von 120-140 °C zugegeben. Weitere 30 Min. wird gerührt. Über einen Filter wird abgefüllt.
Es wird eine klare, farblose Lösung mit einer Viskosität von 8 mPa·s und einem Feststoffgehalt von 14 Gew.% erhalten.

### Beispiel 2a

Ein Polyestergewebe, das mit Elastosil LR 6250 F (Handelsprodukt der Wacker-Chemie GmbH) beschichtet wurde, wird mit der Lösung aus Beispiel 2 mit einem Pinsel beschichtet; das Lösungsmittel wird bei Raumtemperatur in 5 Min. abgedampft und anschließend 5 Min. bei 150 °C getrocknet. Das Beschichtungsgewicht des Topcoats beträgt ca. 70 g/m².

### Beispiel 2b:

Bei einem Anschmutztest mit Ruß zeigt das nach 2a mit dem Topcoat versehene Gewebe eine deutlich reduzierte Schmutzaufnahme. Wird ein mit Ruß verschmutztes, saugfähiges Papier über das beschichtete Gewebe gezogen und die Schmutzaufnahme gravimetrisch bestimmt, so ist die Schmutzaufnahme um den Faktor 6 reduziert.

Die Schmutzaufnahme wird, wie in Beispiel 1b beschrieben, durchgeführt.
Schmutzaufnahme ohne Topcoat beträgt 0,19 g/m² Schmutzaufnahme mit Topcoat aus Beispiel 2 beträgt 0,03 g/m².

### Beispiel 2c:

Auf das mit Elastosil LR 6250 F beschichtete Gewebe wird Beschichtung auf Beschichtung plaziert. Es wird ein Reibungsfaktor von 1,4 gemessen. Das modifizierte Gewebe aus Beispiel 2a zeigt im selben Test den Reibungsfaktor 0,8.
Der Reibungsfaktor des mit Elastosil LR 6250 F beschichteten Polyestergewebes gegen die unbeschichtete Geweberückseite beträgt 0,9. Das nach Beispiel 2a modifizierte Laminat weist einen Reibungsfaktor von 0,65 auf.
Die Reibungsfaktoren gegen Edelstahl sind 0,8 ohne bzw. 0,52 mit Topcoat.
Die Reibungsfaktoren gegen Glas sind 1,3 ohne bzw. 0,77 mit Topcoat. Beschichtung wie in Beispiel 2a beschrieben.

### Beispiel 3:

In einer Anlage, die mit einer Dissolverscheibe ausgerüstet wird, werden 47,8 kg Benzin (Siedebereich 140-150 °C), 102,6 kg Methylethylketon, 236,2 kg Xylol, 9,9 kg n-Butanol und 60 kg Tetrahydrofuran vorgelegt und unter starkem Durchmischen 52 kg Vinnol E 15/40 A (Handelsprodukt der Wacker-Chemie GmbH) in diesem Lösungsmittelgemisch gelöst.
0,5 kg Isocyanopropyltriethoxysilan werden zugegeben und eine Stunde am Rückfluß (ca. 64 °C) gekocht. Es wird auf 30 °C abgekühlt und 50 kg Tetrahydrofuran, 350 kg Toluol und 1 000 kg Aceton zugegeben. 30 Min. wird intensiv vermischt. Das klare, farblose Produkt weist eine Viskosität von 11 mPa·s und einen Festgehalt von ca. 2,8 Gew.-% auf.

### Beispiel 3a:

Ein Polyestergewebe, das mit Elastosil LR 6250 F (Handelsprodukt der Wacker-Chemie GmbH) beschichtet wurde, wird in die Lösung aus Beispiel 3 getaucht. Nach dem Entfernen aus dem Tauchbad wird das Lösungsmittel bei Raumtemperatur in 5 Min. abgedampft und anschließend 5 Min. bei 150 °C getrocknet. Das Beschichtungsgewicht des Topcoats beträgt ca. 20 g/m².

### Beispiel 3b:

Bei einem Anschmutztest mit Ruß zeigt das nach 3a mit dem Topcoat versehene Gewebe eine deutlich reduzierte Schmutzaufnahme. Wird ein mit Ruß verschmutztes, saugfähiges Papier über das beschichtete Gewebe gezogen und die Schmutzaufnahme gravimetrisch bestimmt, so ist die Schmutzaufnahme um den Faktor 9 reduziert.

Die Schmutzaufnahme wird wie in Beispiel 1b beschrieben durchgeführt.
Schmutzaufnahme ohne Topcoat beträgt 0,17 g/m² Schmutzaufnahme mit Topcoat aus Beispiel 3 beträgt 0,019 g/m².

### Beispiel 3c:

Auf das mit Elastosil LR 6250 F beschichtete Gewebe wird Beschichtung auf Beschichtung plaziert. Es wird ein Reibungsfaktor von 1,4 gemessen. Das modifizierte Gewebe aus Beispiel 3a zeigt in dem selben Test den Reibungsfaktor 0,7. Der Reibungsfaktor des mit Elastosil LR 6250 F beschichteten Polyestergewebes gegen die unbeschichtete Geweberückseite beträgt 0,9. Das nach Beispiel 3a modifizierte Laminat weist einen Reibungsfaktor von 0,48 auf.
Die Reibungsfaktoren gegen Edelstahl sind 0,8 ohne bzw. 0,62 mit Topcoat.
Die Reibungsfaktoren gegen Glas sind 1,3 ohne bzw. 0,52 mit Topcoat. Beschichtung wie in Beispiel 3a beschrieben.

### Anschmutztest

Ein saugfähiges Kreppapier wird mit 1 g Ruß pro m² beaufschlagt und auf das erfindungsgemäß beschichtete Gewebe oder ein Vergleichsgewebe unter zyklischen Bewegungen aufgebracht. Im allgemeinen nahm das erfindungsgemäß beschichtete Gewebe 0,01 g/m² bis 0,05 g/m² Ruß auf, während das nicht erfindungsgemäß beschichtete Vergleichsgewebe 0,1 g/m² bis 0,3 g/m² aufnahm.

### Bestimmung des Reibungsfaktors

Der Reibungsfaktor wird nach ASTM Standard D-1894 mit einem Slip/Peel Tester Modell SP-103 der Firma Instrumentos Inc., Cleveland, Ohio bestimmt.

## Patentansprüche

1. Zusammensetzung herstellbar unter Verwendung von
(1) Polymerkomponeneten ausgewählt aus der Gruppe bestehend aus
(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2})
(A2) Polyorganosiloxanen aus Einheiten (Q-Einheiten) der Formel (Si-O_{4/2}) und gegebenenfalls Einheiten (M-Einheiten) der Formel (R₃Si-O_{1/2})
worin
R gleich oder verschieden, gegebenenfalls halogenierte Kohlenwasserstoffreste mit 1-18 Kohlenstoffatomen je Rest oder
OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
mit der Maßgabe, daß pro Molekül 0,01 bis 3,0 Gew.-% Si-gebundene Reste OR¹ enthalten sind,
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, daß sie mit Si-gebundenen (Meth)acrylatgruppen haltigen Silanen copolymerisier
(2) Silan der allgemeinen Formel
R³ₓSi(OR²)₄₋ₓ ,
wobei R² einen einwertigen, gegebenenfalls substituierten Kohlenwasserstoffrest,
R³ einen einwertigen organischen Rest,
x 0 oder 1 bedeutet,
(3) gegebenenfalls Lösungsmittel
(4) gegebenenfalls Katalysator
(5) gegebenenfalls Wasser.

2. Zusammensetzung nach Anspruch 1, dadurch gekennzeichnet, daß bei den Polyorganosiloxanen (A1) das Verhältnis M-Einheiten zu T-Einheiten 0-1,8:1 ist und bei den Polyorganosiloxanen (A2) das Verhältnis M-Einheiten zu Q-Einheiten 0,00-2,7:1 ist.

3. Verfahren zur Herstellung der Zusammensetzung nach Anspruch 1 oder 2, dadurch gekennzeichnet, daß (1) Polymerkomponenten ausgewählt aus der Gruppe bestehend aus
(A1) Polyorganosiloxanen aus Einheiten (T-Einheiten) der Formel (R₁Si-O_{3/2}) und gegebenenfalls Einheiten (M-Einheiten) der Formel (R₃Si-O_{1/2})
(A2) Polyorganosiloxanen aus Einheiten (Q-Einheiten) der Formel (Si-O_{4/2}) und gegebenenfalls Einheiten (M-Einheiten) der Formel (R₃Si-O_{1/2})
worin
R gleich oder verschieden, gegebenenfalls halogenierte Kohlenwasserstoffreste mit 1-18 Kohlenstoffatomen je Rest oder OR¹ bedeutet, wobei R¹ gleich oder verschieden sein kann und Wasserstoff oder einen einwertigen gegebenenfalls substituierten Kohlenwasserstoffrest mit 1-8 Kohlenstoffatom(en) bedeutet,
mit der Maßgabe, daß pro Molekül 0,01 bis 3,0 Gew.-% Si-gebundene Reste OR¹ enthalten sind,
(B) Vinylchlorid-Hydroxypropylacrylat-Copolymere
(C) Vinylacetat-Ethylen-Copolymer
(D) Polyvinylchlorid
(E) Polyamid
(F) Polyester
(G) Acrylat-Polyester-Copolymere
(H) Polyamid-Polyester-Copolymere
(I) Vinylacetat-Polyester Copolymere
(J) Monomere (Meth)acrylate, mit der Maßgabe, daß sie mit Si-gebundenen (Meth)acrylatgruppen haltigen Silanen copolymerisiert werden, mit
(2) Silan der allgemeinen Formel
R³ₓSi(OR²)₄₋ₓ ,
wobei R² einen einwertigen, gegebenenfalls substituierten Kohlenwasserstoffrest,
R³ einen einwertigen organischen Rest,
x 0 oder 1 bedeutet,
(3) gegebenenfalls Lösungsmittel
(4) gegebenenfalls Katalysator und
(5) gegebenenfalls Wasser umgesetzt oder vermischt werden.

4. Formkörper oder Elastomer, dadurch gekennzeichnet, daß der Formkörper oder Elastomer mit einer Zusammensetzung nach Anspruch 1 oder 2 oder nach Anspruch 3 hergestellt, beschichtet wird.

5. Verfahren zur Beschichtung von Formkörpern oder Elastomeren, dadurch gekennzeichnet, daß ein Formkörper oder Elastomer mit einer Zusammensetzung nach Anspruch 1 oder 2 oder nach Anspruch 3 hergestellt, beschichtet wird.
